# FASCICULE DE BREVET EUROPEEN

(11) **EP 1 491 806 B1**
(45) Date de publication et mention de la délivrance du brevet: **28.11.2012**
(21) Numéro de dépôt: 04291601.5
(22) Date de dépôt: 25.06.2004
(51) Int. Cl.: F02C 7/22, F02C 7/32, F16L 3/223

(54) **Carter de turboréacteur comportant un dispositif de mise en place et de maintien de harnais électriques**
Gehäuse für ein Mantelstromtriebwerk mit einer Vorichtung zur Befestigung und Halten eines elektrischen Kabelbaumes.
Turbojet casing having a dDevice for fixing and holding electrical harness on a jet engine

(30) Priorité: 27.06.2003 FR 0307808
(43) Date de publication de la demande: 29.12.2004
(73) Titulaire: SNECMA, 75015 Paris (FR)
(72) Inventeur: Naudet, Jacky, 91070 Bondoufle (FR); Rivory, Aude, 75015 Paris (FR); Gaignon, Gael, 77820 Le Chatelet en Brie (FR)
(74) Mandataire: David, Daniel

(56) Documents cités:
- WO-A-00/79660
- FR-A- 591 314
- GB-A- 616 753
- GB-A- 2 293 923
- US-A- 3 710 568
- US-A- 3 916 089
- US-A- 4 244 544
- US-A- 5 174 110

## Description

La présente invention concerne un carter de turboréacteur avec un dispositif de mise en place et de maintien des harnais électriques.

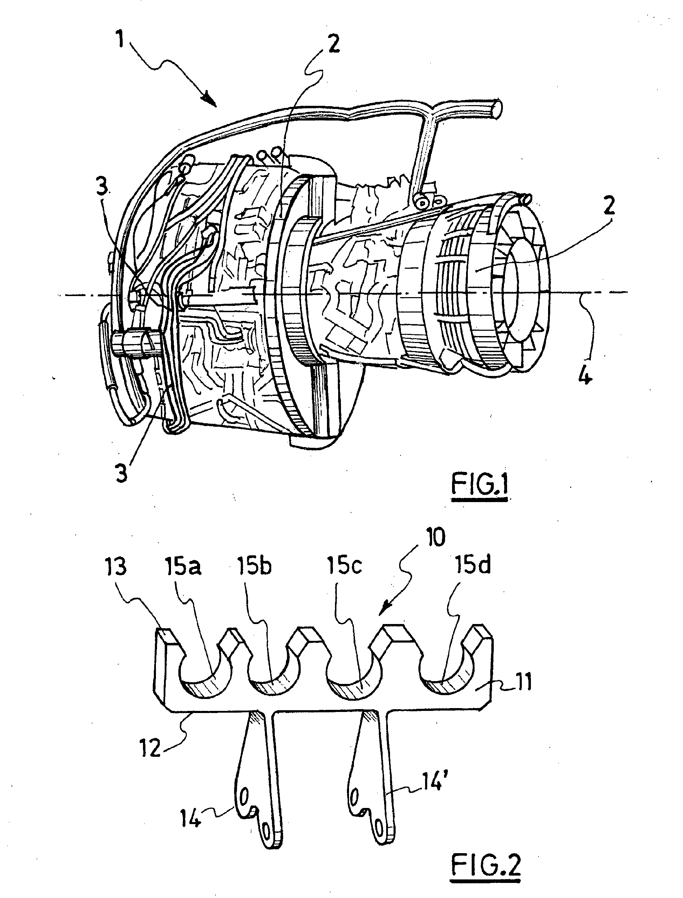

En référence à la figure 1, un turboréacteur 1 comprend un carter 2, éventuellement en plusieurs parties selon sa structure, qui en enveloppe les divers composants, rotatifs ou non, comme par exemple la soufflante, le compresseur, la chambre de combustion, la turbine, la tuyère et la chambre de post-combustion le cas échéant.

A la surface externe de ce carter 2, outre les canalisations de transport de fluides, sont disposés de nombreux câblages électriques, appelés harnais électriques 3 dans le domaine des turboréacteurs. Ces harnais électriques alimentent en particulier les divers équipements périphériques du turboréacteur 1.

Les harnais 3 sont généralement maintenus sur le carter 2 par des colliers ou des lyres en tôle, sur lesquels ils sont encliquetés à distances régulières, afin d'être maintenus sans flottement. Les colliers et lyres sont fixés ou soudés à des brides ou des saillies du carter 2. Les points de fixation sont définis au cas par cas en fonction des harnais 3 à maintenir ou de l'urgence d'un éventuel remplacement. En outre, chaque élément de harnais doit être remplaçable individuellement.

Il en résulte un montage non standardisé et donc très fastidieux de l'ensemble des harnais 3, ce qui est désavantageux, en termes de coût et de cycle de production, mais également de masse, du fait de la présence de nombreuses pièces en tôle.

La présente invention vise à pallier ces inconvénients.

A cet effet, la présente invention concerne un carter de turboréacteur.

Selon les caractéristiques de la revendication 1.

L'art antérieur est illustré par le document US 5174110

D'autres caractéristiques et avantages de l'invention apparaîtront à la lecture de la description suivante de la forme de réalisation préférée du dispositif de l'invention, en référence aux dessins annexés, sur lequels :
- la figure 1 représente une vue en perspective d'un turboréacteur ;
- la figure 2 représente une vue en perspective de face d'une barrette du dispositif de l'invention;
- la figure 3 représente une vue en perspective de côté d'une barrette du dispositif de l'invention, maintenant des harnais ;
- la figure 4 représente une vue en perspective schématique de face d'un carter de turboréacteur sur lequel sont fixées des barrettes du dispositif de l'invention ;
- la figure 5 représente une vue en perspective de face d'une première forme de réalisation d'un barillet du dispositif de l'invention ;
- la figure 6 représente une vue en perspective de côté du barillet de la figure 5, maintenant des harnais ;
- la figure 7 représente une vue en perspective de face d'une seconde forme de réalisation d'un barillet du dispositif de l'invention;
- la figure 8 représente une vue en perspective de côté du barillet de la figure 7, maintenant des harnais ;
- la figure 9 représente une vue en perspective de côté d'une fausse canalisation du dispositif de l'invention, et
- la figure 10 représente une vue en perspective d'un carter de turboréacteur sur lequel sont fixés la canalisation et les barillets du dispositif de l'invention.

En référence à la figure 1, un turboréacteur 1 comprend un carter 2 enveloppant ses divers composants. Ce carter 2 s'étend globalement de façon périphérique autour de l'axe 4 du turboréacteur 1. A la périphérie du carter 2 sont disposés des harnais 3. La figure 1 représente un turboréacteur de l'art antérieur, à la surface duquel les harnais 3 sont disposés sans ordre apparent. Le dispositif de l'invention vise à ordonner la disposition des harnais 3.

Le dispositif de l'invention comprend des barrettes 10 dont une est représentée sur la figure 2. La barrette 10 comprend un corps 11, de forme globalement parallélépipédique, de préférence en matière plastique. Sur sa face inférieure 12, la barrette 10 comprend deux pattes de fixation 14, 14'. Dans sa partie supérieure 13, sont aménagés des logements 15a, 15b, 15c, 15d dont la forme est adaptée à celle des harnais 3. Les logements 15a, 15b, 15c, 15d sont formés lors du moulage en plasturgie de la barrette 10. Leur forme peut varier d'une barrette à l'autre, en fonction de l'utilisation qui est faite de cette dernière, l'adaptation se faisant par une configuration ad hoc du moule de plasturgie.

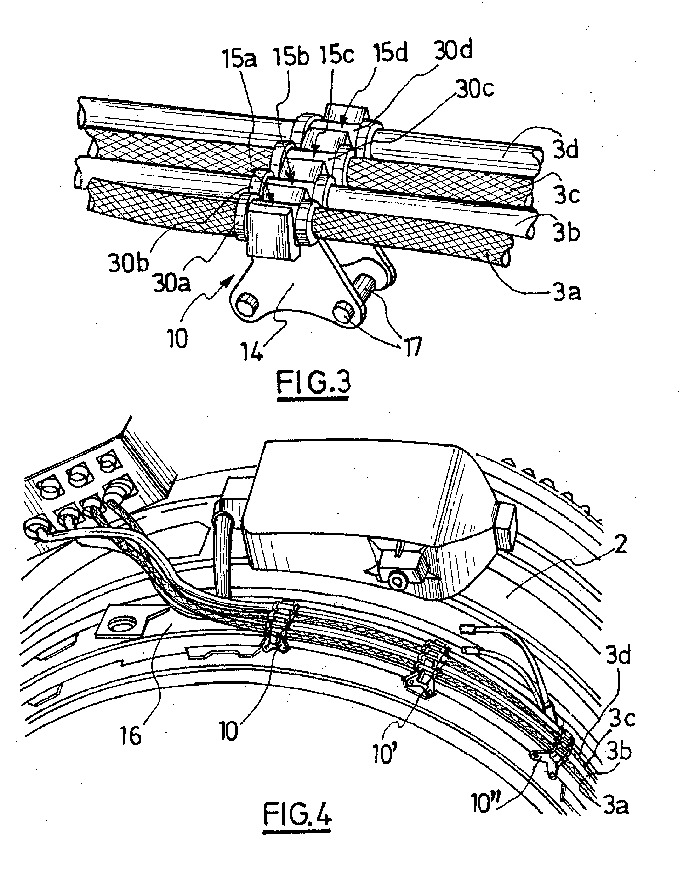

En référence à la figure 3, les logements 15a, 15b, 15c, 15d sont destinés à recevoir des harnais 3a, 3b, 3c, 3d, respectivement. Les harnais 3a, 3b, 3c, 3d se présentent par exemple sous la forme de tuyaux cylindriques en matériau isolant dans lesquels sont glissés les conducteurs électriques. Plus précisément, chaque harnais, 3a, 3b, 3c et 3d, comporte une bague formant palier cylindrique, 30a, 30b, 30c, 30d, respectivement, insérée dans le logement 15a, 15b, 15c, 15d correspondant, et dont le diamètre est adapté à celui du logement 15a, 15b, 15c, 15d la supportant. Chaque bague 30a, 30b, 30c, 30d comprend à chacune de ses extrémités un rebord de diamètre supérieur à celui du logement 15a, 15b, 15c, 15d dans lequel elle est insérée, afin d'empêcher tout mouvement du harnais 3a, 3b, 3c, 3d en translation longitudinale.

La figure 4 montre des barrettes 10, 10', 10", du type de celle décrite précédemment, fixées au carter 2 du turboréacteur 1 afin de maintenir les harnais 3a, 3b, 3c, 3d en position. Dans la forme de réalisation du dispositif de l'invention décrite ici, les barrettes 10, 10', 10" sont destinées au maintien des harnais 3a, 3b, 3c, 3d dans les directions périphériques sensiblement perpendiculaires à l'axe 4 du turboréacteur 1.

Les barrettes 10, 10', 10" peuvent être fixées au carter 2 de diverses manières. Il est choisi ici de les fixer sur des brides 16 circonférentielles du carter 2, dans la mesure où celles-ci sont tangentes aux directions périphériques perpendiculaires à l'axe 4. Ces brides 16 peuvent être de section droite ou en T, par exemple. Un système vis-écrou 17 assure la fixation des pattes 14, dont sont pourvues les barrettes 10, 10', 10", sur les brides 16. On peut aussi utiliser des moyens de fixation rapide, par exemple du type à clipsage, afin de faciliter une mise en place et un remplacement aisés des barrettes 10, 10', 10".

Les harnais 3a, 3b, 3c, 3d ne sont pas a priori tous de diamètres identiques ; les divers logements de chaque barrette 10, 10', 10" sont dimensionnés en conséquence, par dimensionnement des moules de plasturgie.

Les barrettes 10, 10', 10" sont montées sur le carter 2 en fonction de la disposition des harnais 3a, 3b, 3c, 3d à la périphérie du carter 2, qui peut être préétablie. Il est ainsi possible de prévoir des faisceaux de harnais 3a, 3b, 3c, 3d disposés parallèlement les uns aux autres, ce qui facilite leur montage dans la chaîne de production, la lisibilité de leur disposition mais aussi leur remplacement. En outre, il est possible de standardiser les barrettes 10, 10', 10" en fonction des harnais, eux-mêmes standardisés, qu'elles seront censées supporter ; en particulier, cette standardisation pourra être faite pour l'ensemble des modèles de turboréacteurs d'un même constructeur, voire pour les modèles de turboréacteurs des différents constructeurs, permettant une globalisation de la définition des dispositions des harnais sur un turboréacteur.

Le choix de la disposition des harnais en faisceaux ne peut être généralement fait sur l'ensemble du chemin parcouru, sur la périphérie du carter 2, par chaque harnais en particulier. Ainsi, les barrettes 10, 10', 10" de l'invention sont utilisées autant que possible le long des chemins que les harnais d'un même faisceau ont en commun, et lorsqu'un harnais particulier doit dévier de la "route" circonférentielle prévue, son maintien sur le carter 2 jusqu'à son point d'attache final est effectué à l'aide de moyens de maintien classiques, en tôle, par exemple.

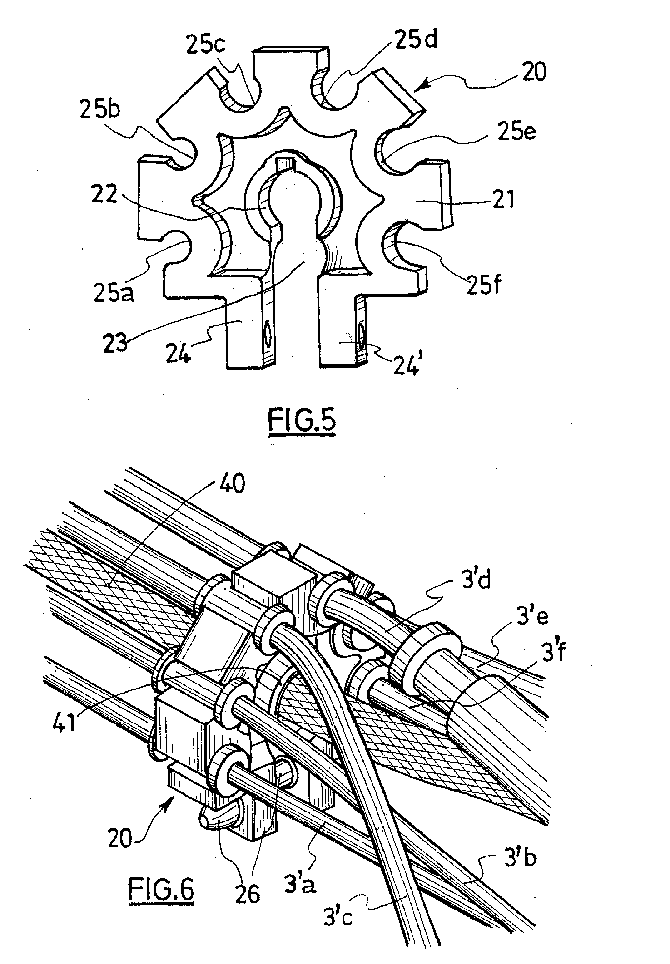

Le dispositif de l'invention comprend également des barillets, du type du barillet 20 représenté sur la figure 5. Le barillet 20 , comprend un corps 21, de formant globalement cylindrique, de préférence en matière plastique. Le barillet 20 comporte un alésage 22 central avec un évidement radial 23 qui s'étend depuis son centre jusqu'à sa partie périphérique inférieure, et définissant au niveau de cette dernière deux pattes de fixation 24, 24'. Sur le reste de sa partie périphérique, le barillet comporte des logements 25a, 25b, 25c, 25d, 25e, 25f à ouverture radiale pour les harnais 3. Les logements 25a, 25b, 25c, 25d, 25e, 25f sont formés lors du moulage en plasturgie du barillet 20. Leur forme peut varier d'un barillet à l'autre, en fonction de l'utilisation qui est faite de ce dernier, l'adaptation se faisant par une configuration ad hoc du moule de plasturgie.

En référence à la figure 6, le barillet 20 est fixé sur une fausse canalisation 40. A l'instar des brides 16 qui supportent les barrettes 10, 10', 10" sur le carter 2, la canalisation 40 maintient le barillet 20 de façon fixe par rapport au carter 2, auquel elle est solidaire. Cette canalisation 40, ici dite fausse dans la mesure où elle n'est pas destinée à assurer le guidage d'un fluide par ailleurs, constitue donc le support du barillet 20 sur le carter 2.

Le barillet 20 est dans ce mode de réalisation fixé à la canalisation 40 par un système vis-écrou 26 coopérant avec les pattes 24, 24'. La canalisation 40 comporte en outre une bague 41 coopérant avec l'alésage 22. Conformément à une variante on utilise un système de fixation rapide. Quel qu'il soit, le système de fixation doit assurer le maintien en translation longitudinale et en rotation du barillet 20 sur la canalisation 40.

De même que pour les barrettes 10, 10', 10", les logements 25a, 25b, 25c, 25d, 25e, 25f du barillet 20 sont destinés à recevoir des harnais 3'a, 3'b, 3'c, 3'd, 3'e, 3'f, respectivement. De même que précédemment, chaque harnais, 3'a, 3'b, 3'c, 3'd, 3'e et 3'f, comporte une bague adaptée à son logement 25a, 25b, 25c, 25d, 25e, 25f, ainsi que des rebords de maintien longitudinal.

Le barillet 20 de la figure 5 comporte six logements 25a, 25b, 25c, 25d, 25e, 25f. Toutefois, il est possible que moins de logements soit nécessaires, si moins de harnais 3 sont destinés à être disposés le long de la canalisation 40 sur laquelle est fixé le barillet 20.

Il est toutefois préférable de disposer d'un type de moule de plasturgie standardisé pour les barillets, globalement indépendant du nombre de logements nécessaires, c'est-à-dire en l'occurrence un moule de forme globale cylindrique identique quel que soit le nombre de logements prévus.

Le nombre de logements peut être sélectionné au moment du moulage en disposant des caches adapté à l'intérieur du moule de plasturgie. Ce dernier permet d'obtenir le nombre maximal de logements nécessaires, sur l'ensemble des chemins suivis par les harnais à la périphérie du turboréacteur, avec possibilité d'en ôter certains. Cette possibilité est indispensable, car il n'est pas acceptable de laisser des logements vides. En effet, le technicien opérant sur le turboréacteur doit pouvoir être sûr que tous les harnais ont bien été mis en place, un logement vide laissant présumer qu'un harnais a été oublié.

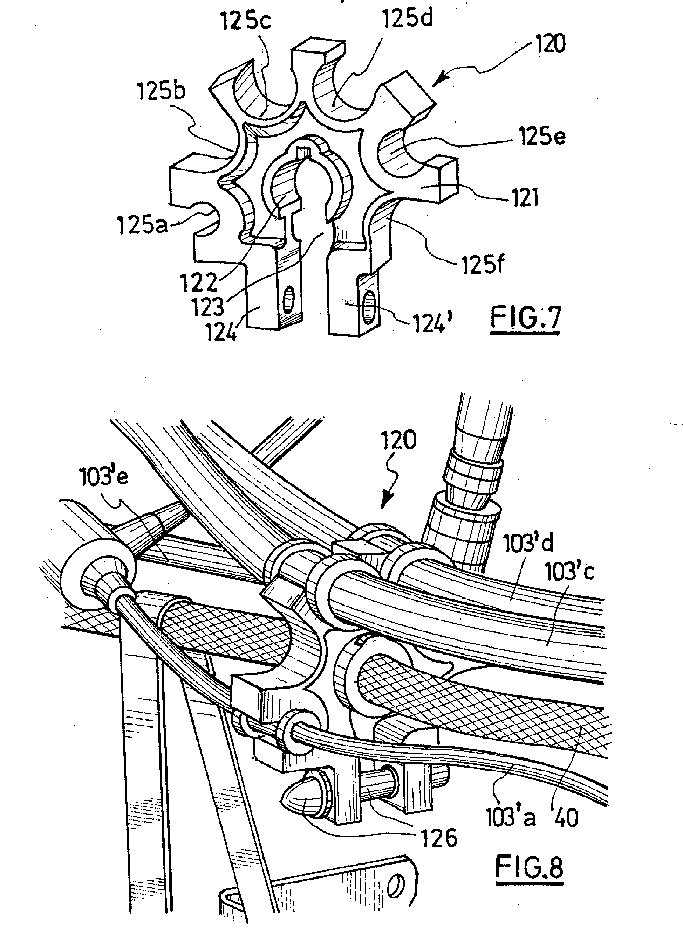

Il est ainsi représenté, sur la figure 7, un barillet 120, issu du même moule de plasturgie que le barillet 20 de la figure 5, le moule ayant été modifié afin de donner aux logements une configuration différente. Ainsi, le barillet 120 comprend quatre logements 125a, 125c, 125d, 125e de harnais, qui sont à la même position angulaire sur le barillet 120 que les logements 25a, 25c, 25d, 25e du barillet 20, mais ici de diamètres différents pour certains. En outre, les sites 125b, 125f, correspondant aux sites des logements 25b, 25f sur le barillet 20, ont été évidés. Il est donc possible de se rendre compte visuellement qu'ils ne sont pas destinés au support d'un harnais.

Il est également envisageable que les sites non destinés à supporter un harnais soient non pas évidés, mais remplis de matière.

Il suffit de prévoir un moule dont le noyau comporte des portions amovibles ou réglables.

On voit sur la figure 8 un barillet 120 fixé de la même façon que le barillet 20 sur la canalisation 40, ici à l'aide d'un système vis-écrou 126, qui pourrait être remplacé par un système de fixation rapide. Les logements 125a, 125c, 125d, 125e supportent des harnais 103'a, 103'c, 103'd, 103'e, par l'intermédiaire de bagues, de la même façon que dans le cas du barillet 20.

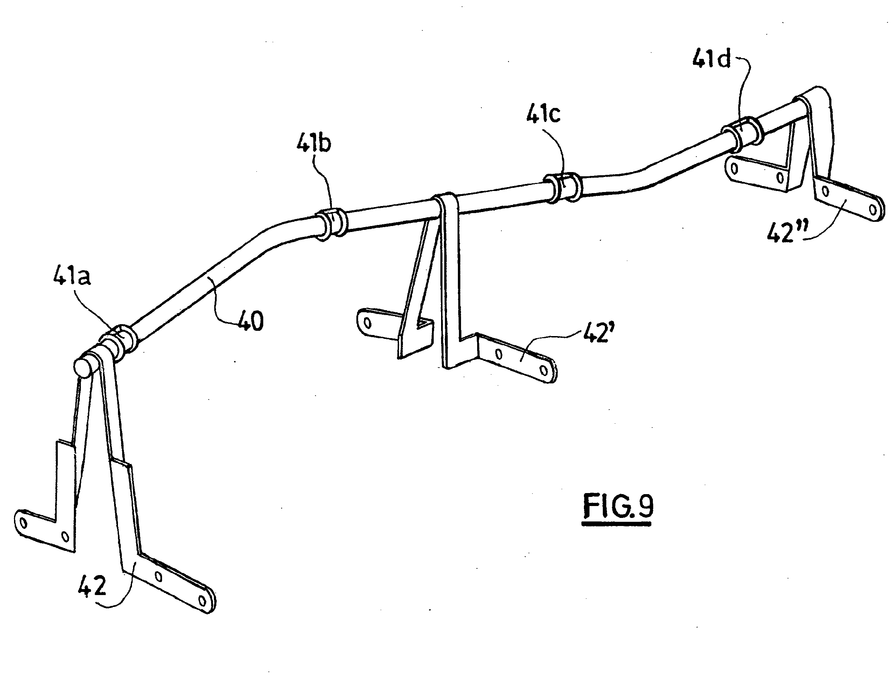

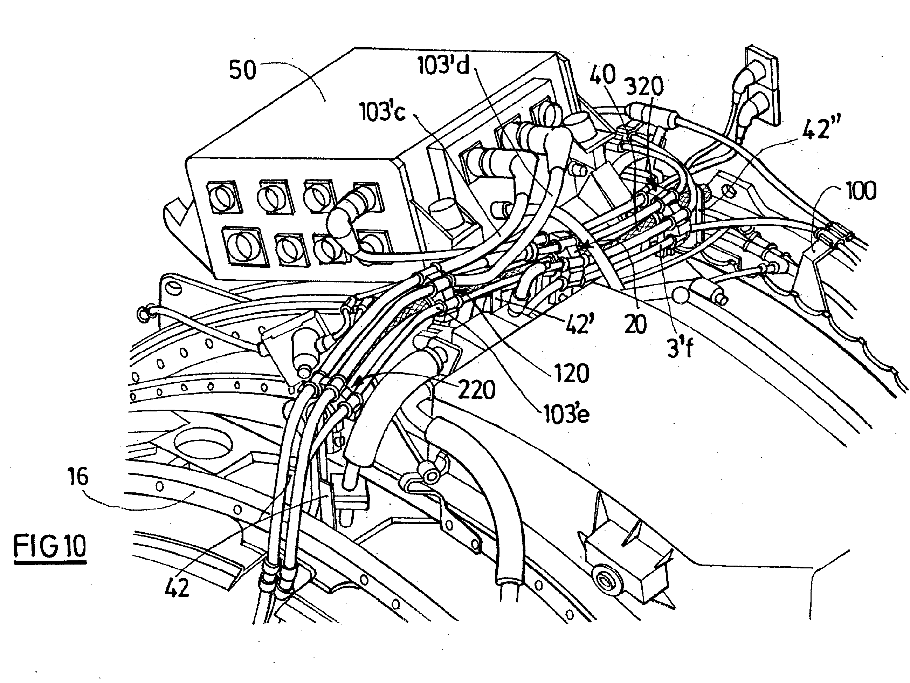

En référence à la figure 9, la fausse canalisation 40 est fixée sur le carter 2 au moyen de pattes de fixation 42, 42', 42". Elle supporte des bagues ou manchons 41a, 41b, 41c, 41d régulièrement répartis sur sa longueur et destinés à recevoir des barillets du type de ceux décrits ci-dessus. Sur la figure 9, la canalisation 40 est représentée seule, sans aucun autre élément, mais elle correspond à la canalisation 40 de la figure 10, isolée des autres éléments pour faciliter la compréhension de sa structure.

En référence à la figure 10, la canalisation 40 de la figure 9 est fixée au carter 2 au moyen de ses pattes de fixation 42, 42', 42". Les bagues 41b et 41 c supportent les barillets 120 et 20, respectivement. Les bagues 41a et 41d supportent deux autres barillets, 220 et 320, conformés en fonction des harnais 3 destinés à être supportés à cet endroit. En l'occurrence, les barillets 220 et 320 comportent respectivement cinq et six logements de harnais.

La canalisation 40 et les barillets 20, 120, 220, 320 qu'elle supporte constituent donc un chemin privilégié pour les harnais 3. Dans la forme de réalisation du dispositif de l'invention décrite ici, les barillets sont destinés au maintien des harnais dans les directions périphériques sensiblement parallèles à l'axe 4 du turboréacteur.

La disposition des harnais 3 peut être prévue au développement du moteur, ce qui permet de concevoir les barillets 20, 120, 220, 320 correspondants et de les placer sur la canalisation 40. La figure 10 illustre bien cette démarche. Il a notamment été précisé plus haut que les harnais ne peuvent suivre du début à la fin de leur parcours des chemins préétablis le long des canalisations 40 ou des brides 16, et qu'ils le font sur la plus longue distance possible avant de dévier vers leur destination, en étant éventuellement supportés par des moyens de support classiques. Cette situation est celle des harnais 103'c et 103'd, qui après avoir été supportés par le barillet 220 et le barillet 120, dévient de la trajectoire de la canalisation 40 pour être connectés à l'équipement 50 auquel ils sont destinés.

On note sur la figure 10 la présence de la bride 16 de la figure 4, la portion de carter 2 représentée étant sensiblement la même sur les deux figures. Les barrettes 10, 10', 10" et les harnais 3a, 3b, 3c, 3d qu'elles supportent ne sont toutefois pas représentés pour la clarté de la description des barillets, mais il est aisé d'imaginer l'ensemble du dispositif de l'invention, c'est-à-dire les barrettes sur leur bride et les barillets sur leur canalisation, par superposition des figures 4 et 10.

Les chemins préétablis des harnais peuvent mettre en jeu, pour un même harnais, à la fois, d'une part, des portions de chemin se faisant le long de brides, supporté par des barrettes, d'autre part, des portions de chemin se faisant le long de (fausses) canalisations, supporté par des barillets. C'est le cas, par exemple, du harnais 3'f de la figure 6, qui après une portion de chemin de long de la canalisation 40, supporté par les barillets 20 et 320, change de direction pour suivre une trajectoire perpendiculaire à l'axe 4 du turboréacteur, en étant notamment supporté par une barrette 100, d'un type quelque peu différent de la barrette 10 de la figure 2, mais standardisé de la même façon.

Il convient de noter qu'à l'instar des barillets, les barrettes sont modulables quant au nombre et aux dimensions des logements qu'elles comportent. Ainsi, à partir d'un modèle de barrette standardisé, il est possible, par simple disposition de caches appropriés dans le noyau du moule de plasturgie, d'enlever ou d'ajouter un logement, ou d'en changer les dimensions. En particulier, un site de logement non utilisé est soit rempli de matière, soit évidé de façon non équivoque, c'est-à-dire de façon à ce qu'un observateur puisse déceler de façon certaine qu'aucun harnais ne sera destiné à être inséré dans l'évidemment.

Les barrettes et les barillets sont issus de la plasturgie. En conséquence, il est très simple d'adapter leur structure et leur composition à l'utilisation qui en est faite, par exemple suivant que l'on veut des pièces souples ou rigides. Il est notamment possible que ces pièces soient composées de plusieurs matériaux ayant des caractéristiques différentes, comportent des fentes de souplesse ou intègrent des éléments métalliques incrustés.

Dans la forme de réalisation décrite du dispositif de l'invention, des barrettes sont utilisées pour le maintien des harnais dans les directions périphériques sensiblement perpendiculaires à l'axe du turboréacteur et des barillets pour les directions périphériques sensiblement parallèles à l'axe du turboréacteur. Les brides s'étendant à la circonférence du carter du turboréacteur, on les utilise avantageusement comme support des éléments de maintien des harnais.

Tout autre type d'élément de maintien des harnais pourrait être utilisé. Il est notamment envisageable d'adapter la géométrie des barillets aux brides.

Grâce au dispositif de l'invention, et dans la mesure où les points extrêmes des harnais sont connus, il est possible de définir à l'avance une disposition simple des harnais. En effet, d'un point à un autre, une trajectoire peut toujours se décomposer, au moins sur sa majeure partie, en la somme de deux trajectoires (ou plus) périphériques, l'une sensiblement perpendiculaire et l'autre sensiblement parallèle à l'axe du turboréacteur.

Ainsi, au moment du montage final du moteur, les ensembles formés des harnais et de leurs éléments de support peuvent être montés plus ou moins d'un bloc, du moins de façon standardisée, automatique et simple, et non pas, comme aujourd'hui, pièce à pièce.

En outre, la maintenance du turboréacteur est grandement simplifiée. Tout d'abord, les dispositions des harnais sont beaucoup plus lisibles. En outre, chaque élément de support peut être monté ou démonté individuellement. Il en va de même pour les harnais, voire certains faisceaux de harnais, qui grâce à l'invention peuvent être montés ou démontés en bloc. De surcroît il va de soi que, si la situation le demande, un moyen d'attache classique tel que collier ou lyre peut être ajouté à tout moment.

## Revendications

1. carter (2) de turboréacteur (1), formant une enveloppe périphérique autour de l'axe (4) du turboréacteur (1), comportant un dispositif de mise en place et de maintien de harnais électriques (3) le dispositif comprenant des supports (10, 10', 10") de harnais standardisés pour les directions perpendiculaires à l'axe du turboréacteur et des supports (20, 120, 220, 320) de harnais standardisés pour les directions paralléles à l'axe du turboréacteur
, dans lequel les supports de harnais standardisés pour le maintien des harnais selon les directions perpendiculaires comportent au moins une barrette (10,10', 10"), avec un corps (11) allongé dans lequel est ménagé au moins un logement (15a, 15b, 15c, 15d) de maintien de harnais (3) et dans lequel les supports de harnais standardisés pour les directions parallèles à l'axe du moteur comportent au moins un barillet (20, 120, 220, 320) avec un corps (21) cylindrique dans lequel est ménagé au moins un logement (15a, 15b, 15c, 15d) de maintien de harnais (3) lequel le barillet (20, 120, 220, 320) comporte un moyen de fixation sur une canalisation (40) montée fixe sur le carter (2) du turboréacteur (1) et la canalisation (40), étant une fausse canalisation.

2. Carter selon la revendication 1, dans lequel la barrette (10, 10', 10") est au moins partiellement constituée de matière plastique.

3. Carter selon l'une des revendications 1 ou 2, dont la barrette (10,10', 10") comprend un moyen de fixation sur une bride (16) du carter (2) du turboréacteur (1).

4. Carter selon la revendication 1, dans lequel le barillet (20, 120, 220, 320) est au moins partiellement constitué de matière plastique.

5. Carter selon la revendication 1, dans lequel la canalisation (40) comporte au moins une bague (41a, 41b, 41c, 41d) de support de barillet (20, 120, 220, 320).

6. Carter selon la revendication 1, dans lequel les supports (10, 10', 10", 20, 120, 220, 320) de harnais (3) sont fixés au moyen de systèmes de vis-écrou (16, 26).

7. Carter selon la revendication 1, dans lequel les supports de harnais (10, 10', 10", 20, 120, 220, 320) sont fixés au moyen de systèmes de fixation rapide.

## Claims

1. Housing (2) of a turbo-jet engine (1), forming a peripheral envelope around the axis (4) of the turbo-jet engine (1), comprising a device for setting up and holding electric harnesses (3), the device comprising harness supports (10, 10', 10") standardised for holding harnesses in directions perpendicular to the axis of the turbo-jet engine and harness supports (20, 120, 220, 320) standardised for holding harnesses in directions parallel to the axis of the turbo-jet engine, wherein the harness supports standardised for holding harnesses in the perpendicular directions comprise at least one lug (10, 10', 10") having an elongated body (11) in which at least one housing (15a, 15b, 15c, 15d) for holding harnesses (3) is arranged and wherein the harness supports standardised for holding harnesses in directions parallel to the axis of the engine comprise at least one barrel (20, 120, 220, 320) having a cylindrical body (21) in which at least one housing (15a, 15b, 15c, 15d) for holding harnesses (3) is arranged, the barrel (20, 120, 220, 320) comprising a means for attaching to a duct (40) mounted fixedly on the housing (2) of the turbo-jet engine (1), the duct (40) being a dummy duct.

2. Housing according to claim 1, wherein the lug (10, 10', 10") is comprised of plastics material at least in part.

3. Housing according to either claim 1 or claim 2, wherein the lug (10, 10', 10") comprises a means for attaching to a flange (16) of the housing (2) of the turbo-jet engine (1).

4. Housing according to claim 1, wherein the barrel (20, 120, 220, 320) is comprised of plastics material at least in part.

5. Housing according to claim 1, wherein the duct (40) comprises at least one ring (41a, 41b, 41c, 41d) for supporting a barrel (20, 120, 220, 320).

6. Housing according to claim 1, wherein the harness (3) supports (10, 10', 10", 20, 120, 220, 320) are attached by means of nut and bolt systems (16, 26).

7. Housing according to claim 1, wherein the harness supports (10, 10', 10", 20, 120, 220, 320) are attached by means of quick-release fastening systems.

## Patentansprüche

1. Gehäuse (2) für Strahltriebwerk (1), das eine umlaufende Umhüllung um die Achse (4) des Strahltriebwerks (1) bildet und eine Vorrichtung zum Einsetzen und Halten von elektrischen Kabelbäumen (3) aufweist, wobei die Vorrichtung Träger (10, 10', 10") standardisierter Kabelbäume für das Halten der Kabelbäume in den Richtungen, die zu der Achse des Strahltriebwerks senkrecht sind, und Träger (20, 120, 220, 320) standardisierter Kabelbäume für das Halten der Kabelbäume in den Richtungen, die zu der Achse des Strahltriebwerks parallel sind, umfasst, wobei die Träger standardisierter Kabelbäume für das Halten der Kabelbäume in den senkrechten Richtungen mindestens eine Leiste (10, 10', 10") mit einem langgezogenen Körper (11) aufweisen, in dem mindestens ein Sitz (15a, 15b, 15c, 15d) zum Halten von Kabelbäumen (3) eingerichtet ist, und wobei die Träger standardisierter Kabelbäume für das Halten der Kabelbäume in den Richtungen, die zu der Achse des Antriebs parallel sind, mindestens eine Trommel (20, 120, 220, 320) mit einem zylindrischen Körper (21) aufweisen, in dem mindestens ein Sitz (15a, 15b, 15c, 15d) zum Halten von Kabelbäumen (3) eingerichtet ist, wobei die Trommel (20, 120, 220, 320) ein Mittel zum Befestigen an einer Leitung (40), die an dem Gehäuse (2) des Stahltriebwerks (1) fest montiert ist, aufweist und wobei die Leitung (40) eine Blindleitung ist.

2. Gehäuse nach Anspruch 1, wobei die Leiste (10, 10', 10") mindestens teilweise aus Kunststoff besteht.

3. Gehäuse nach einem der Ansprüche 1 oder 2, wobei die Leiste (10, 10', 10") ein Mittel zum Befestigen an einem Flansch (16) des Gehäuses (2) des Strahltriebwerks (1) umfasst.

4. Gehäuse nach Anspruch 1, wobei die Trommel (20, 120, 220, 320) mindestens teilweise aus Kunststoff besteht.

5. Gehäuse nach Anspruch 1, wobei die Leitung (40) mindestens einen Ring (41 a, 41b, 41c, 41d) zum Tragen der Trommel (20, 120, 220, 320) aufweist.

6. Gehäuse nach Anspruch 1, wobei die Träger (10, 10', 10", 20, 120, 220, 320) von Kabelbäumen (3) mit Hilfe von Schrauben-Mutter-Systemen (16, 26) befestigt sind.

7. Gehäuse nach Anspruch 1, wobei die Träger (10, 10', 10", 20, 120, 220, 320) von Kabelbäumen mit Hilfe von Schnellbefestigungssystemen befestigt sind.
